# FASCICULE DE BREVET EUROPEEN

(11) **EP 3 521 174 B1**
(45) Date de publication et mention de la délivrance du brevet: **15.04.2020**
(21) Numéro de dépôt: 19153409.8
(22) Date de dépôt: 24.01.2019
(51) Int. Cl.: B64D 27/26, F16B 39/20, F16C 11/04, B64D 27/18, F16C 11/06, F16B 21/18

(54) **ASSEMBLAGE POUR UNE ATTACHE-MOTEUR D'AERONEF COMPRENANT UN AXE D'ARTICULATION SUPPORTE PAR UNE CHAPE ET IMMOBILE EN TRANSLATION**
ANORDNUNG FÜR EINE FLUGZEUG-MOTORBEFESTIGUNG, DIE EINE GELENKACHSE UMFASST, DIE VON EINER GABEL GEHALTEN WIRD UND NICHT VERSCHIEBBAR IST
ASSEMBLY FOR AN AIRCRAFT ENGINE ATTACHMENT COMPRISING A HINGE PIN SUPPORTED BY A YOKE AND IMMOBILE IN TRANSLATION

(30) Priorité: 06.02.2018 FR 1850974
(43) Date de publication de la demande: 07.08.2019
(73) Titulaire: Airbus Operations S.A.S., 31060 Toulouse (FR)
(72) Inventeur: DEFORET, Thomas, 31300 Toulouse (FR); GELIOT, Jean, 31400 Toulouse (FR); SOULIE, Adeline, 82600 Verdun sur Garonne (FR)
(74) Mandataire: Gicquel, Olivier Yves Gérard

(56) Documents cités:
- WO-A1-2014/154980
- FR-A1- 3 014 971
- US-A- 6 150 656

## Description

La présente demande se rapporte à un assemblage pour une attache-moteur d'aéronef comprenant un axe d'articulation supporté par une chape et immobile en translation.

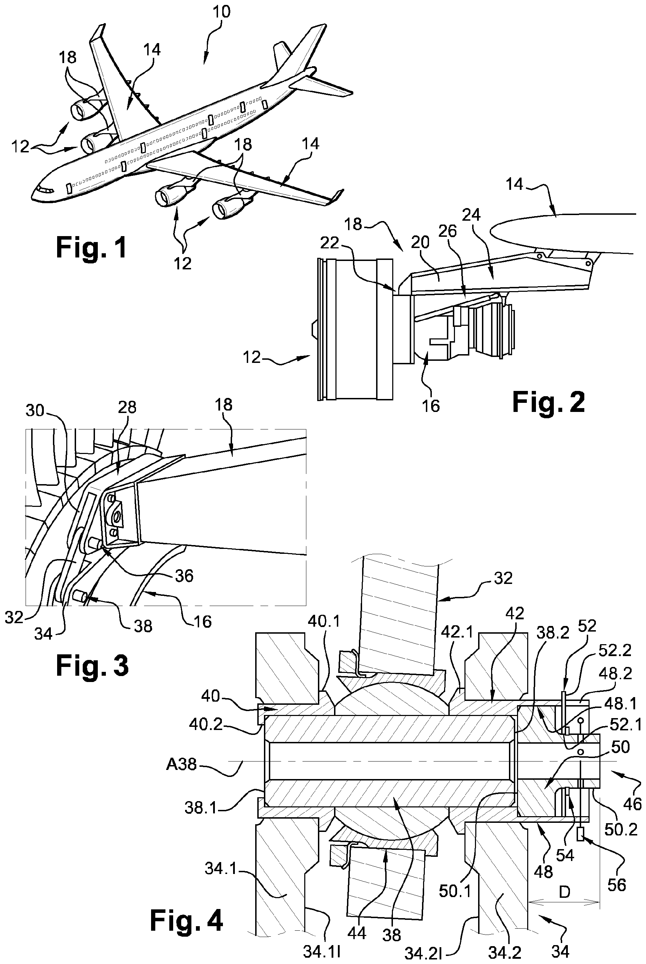

Selon une configuration visible sur les figures 1 et 2, un aéronef 10 comprend plusieurs ensembles moteurs 12 qui sont positionnés sous la voilure 14 de l'aéronef 10.

Un ensemble moteur 12 comprend un moteur 16, une nacelle (non représentée sur la figure 2) positionnée autour du moteur 16 et un mât 18 qui assure la liaison entre le moteur 16 et le reste de l'aéronef 10, notamment la voilure 14.

Le mât 18 comprend une structure primaire 20 qui est reliée au moteur 16 par une attache-moteur avant 22, une attache-moteur arrière 24 et un couple de bielles de poussée 26 qui assurent la reprise des efforts de poussée.

Selon un mode de réalisation visible sur la figure 3, l'attache-moteur avant 22 comprend une platine 28, solidaire du mât 18, qui présente deux chapes 30 disposées de part et d'autre du mât 18, ainsi que deux bielles 32 qui relient chacune l'une des chapes 30 de la platine 28 à une chape 34 solidaire d'un carter du moteur 16. Ainsi, chaque bielle 32 est reliée à l'une des chapes 30 de la platine 28 par un premier axe d'articulation 36 et à l'une des chapes 34 du moteur 16 par un deuxième axe d'articulation 38.

Selon un mode de réalisation visible sur la figure 4 et décrit en détail dans le document FR3014971, un assemblage entre la chape 34 solidaire du moteur 16 et la bielle 32 comprend un axe d'articulation 38 monté dans un premier palier lisse 40 inséré dans une première branche 34.1 de chape 34 et dans un deuxième palier lisse 42 inséré dans une seconde branche 34.2 de la chape 34, l'axe d'articulation 38 supportant, entre les première et deuxième branches 34.1 et 34.2, une liaison rotule 44 configurée pour relier la bielle 32 et l'axe d'articulation 38.

Le premier palier lisse 40 comprend, à une première extrémité, une collerette extérieure 40.1 configurée pour prendre appui contre une face intérieure 34.1I de la première branche 34.1 et, à une deuxième extrémité, un épaulement 40.2 configuré pour bloquer en translation l'axe d'articulation 38 selon un premier sens. Le deuxième palier lisse 42 comprend, à une première extrémité, une collerette extérieure 42.1 configurée pour prendre appui contre une face intérieure 34.2I de la deuxième branche 34.2.

L'axe d'articulation 38 est un cylindre qui présente un axe A38, une première face d'extrémité 38.1, sensiblement perpendiculaire à l'axe A38, configurée pour prendre appui contre l'épaulement 40.2 du premier palier lisse 40 et une deuxième face d'extrémité 38.2 sensiblement perpendiculaire à l'axe A38.

L'assemblage comprend également un dispositif de blocage 46 configuré pour bloquer en translation l'axe d'articulation 38 selon un deuxième sens qui, associé à l'épaulement 40.2, permet d'immobiliser en translation l'axe d'articulation 38.

Le dispositif de blocage 46 comprend :
- Un prolongement 48 du deuxième palier lisse 42 qui présente un alésage intérieur 48.1 taraudé et des encoches 48.2,
- une vis de blocage 50 se vissant dans le prolongement 48 qui présente une face avant 50.1 prenant appui contre la deuxième face d'extrémité 38.2 de l'axe d'articulation 38 et une partie arrière 50.2 de section hexagonale permettant de visser la vis 50,
- une rondelle de verrouillage 52 comportant une ouverture 52.1 qui s'emmanche sur la partie arrière 50.2 hexagonale de la vis 50 et deux languettes 52.2, diamétralement opposées, qui se logent dans des encoches 48.2 du prolongement 48 pour immobiliser en rotation la vis 50 par rapport au prolongement 48,
- un anneau d'arrêt élastique extérieur 54 qui se loge partiellement dans une gorge annulaire ménagée dans la partie arrière 50.2 de la vis 50 permettant d'immobiliser la rondelle de verrouillage 52 dans les encoches 48.2 du prolongement 48, et
- une épingle 56 qui traverse le prolongement 48 et la partie arrière 50.2 de la vis 50 pour immobiliser en rotation la vis 50 par rapport au prolongement 48.

Ce mode de réalisation permet d'obtenir un double blocage en rotation de la vis 50 par rapport au prolongement 48. Cependant, le dispositif de blocage 46 ainsi obtenu génère un déport D, par rapport à la face extérieure de la branche de la chape, important compte tenu de l'empilage de la rondelle de verrouillage 52, de l'anneau d'arrêt élastique extérieur 54 et de l'épingle 56.

La présente invention vise à remédier aux inconvénients de l'art antérieur.

A cet effet, l'invention a pour objet un assemblage pour une attache-moteur d'aéronef tel que revendiqué dans la revendication 1. L'assemblage selon l'invention est compact puisque le déport du prolongement tubulaire est moins important que pour l'art antérieur.

Selon une autre caractéristique, l'anneau d'arrêt élastique intérieur est intercalé entre la vis de blocage et le deuxième système de blocage.

D'autres caractéristiques et avantages ressortiront de la description de l'invention qui va suivre, description donnée à titre d'exemple uniquement, en regard des dessins annexés parmi lesquels
- La figure 1 est une vue en perspective d'un aéronef,
- La figure 2 est une représentation schématique d'un ensemble propulsif relié à une voilure qui illustre un mode de réalisation,
- La figure 3 est une vue en perspective d'une attache-moteur avant qui illustre un mode de réalisation,
- La figure 4 est une coupe d'un assemblage d'une attache-moteur qui illustre un mode de réalisation de l'art antérieur,
- La figure 5 est une coupe d'un assemblage d'une attache-moteur qui illustre un mode de réalisation de l'invention,
- La figure 6 est une vue en perspective en éclaté de l'assemblage visible sur la figure 5,
- La figure 7 est une vue d'une extrémité d'un axe d'articulation de l'assemblage visible sur la figure 5,
- La figure 8 est une demi-coupe d'un prolongement tubulaire d'un deuxième palier lisse qui illustre un mode de réalisation de l'invention, et
- La figure 9 est une demi-coupe d'une vis de blocage qui illustre un mode de réalisation de l'invention.

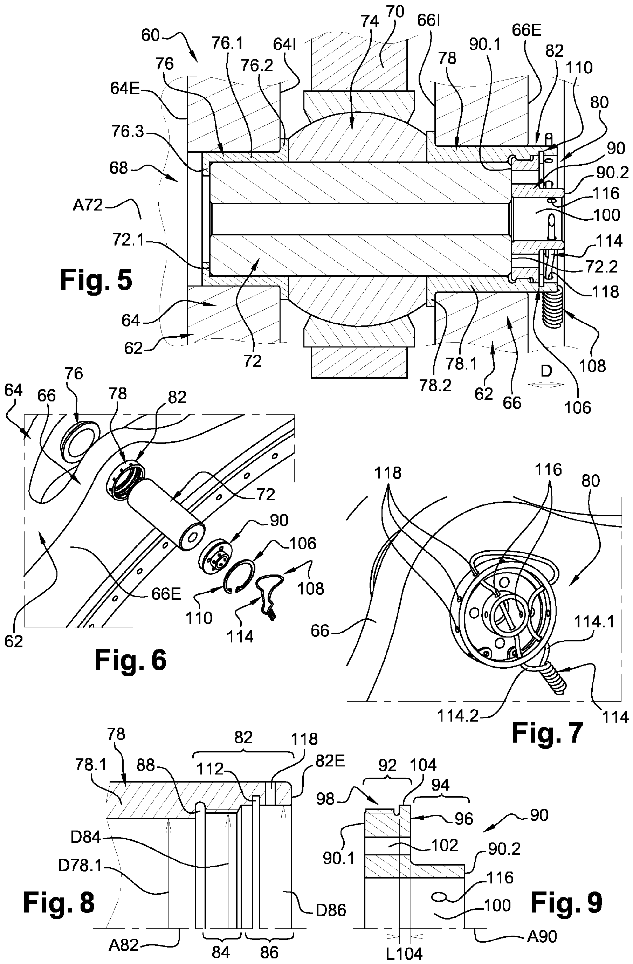

Selon un mode de réalisation illustré sur la figure 5, une partie d'une attache-moteur avant 60 comprend une chape 62, solidaire d'un moteur d'aéronef (ou d'un de ces carters), présentant deux première et deuxième branches 64, 66, reliée par une liaison 68 à une bielle 70 elle-même reliée à une structure primaire d'un mât d'aéronef. La liaison 68 comprend un axe d'articulation 72, qui supporte en partie centrale une rotule 74, reliant l'axe d'articulation 72 et la bielle 70, et des premier et deuxième paliers lisses 76, 78, disposés de part et d'autre de la rotule 74, reliant l'axe d'articulation 72 et les branches 64, 66 de la chape 62.

La première branche 64 comprend une face intérieure 64I, orientée vers la deuxième branche 66, et une face extérieure 64E parallèle à la face intérieure 64I. La deuxième branche 66 comprend une face intérieure 66I, orientée vers la première branche 64, et une face extérieure 66E parallèle à la face intérieure 66I. Selon une configuration, la face extérieure 64E de la première branche 64 est difficilement accessible et l'axe d'articulation 72 est introduit via la face extérieure 66E de la deuxième branche 66.

La première branche 64 supporte le premier palier lisse 76 qui présente un corps tubulaire 76.1, une collerette extérieure 76.2 à une première extrémité prenant appui en fonctionnement contre la face intérieure 64I de la première branche 64 et un épaulement intérieur 76.3 configuré pour bloquer en translation l'axe d'articulation 72 selon un premier sens.

La deuxième branche 66 supporte le deuxième palier lisse 78 qui présente un corps tubulaire 78.1 et une collerette extérieure 78.2 à une première extrémité prenant appui en fonctionnement contre la face intérieure 66I de la deuxième branche 66. Le corps tubulaire 78.1 comprend un diamètre intérieur D78.1

L'axe d'articulation 72 est un cylindre qui présente un axe A72, une première face d'extrémité 72.1, sensiblement perpendiculaire à l'axe A72, prenant appui en fonctionnement contre l'épaulement intérieur 76.3 du premier palier lisse 76 et une deuxième face d'extrémité 72.2 sensiblement perpendiculaire à l'axe A72.

L'assemblage comprend également un dispositif de blocage 80 configuré pour bloquer en translation l'axe d'articulation 72 selon un deuxième sens (opposé au premier sens) qui, associé à l'épaulement 76.3 du premier palier lisse 76, permet d'immobiliser en translation l'axe d'articulation 72.

A l'exception du deuxième palier lisse 78 et du dispositif de blocage 80, les autres éléments de la liaison 68 peuvent être identiques à ceux de l'art antérieur précédemment décrit. Ainsi, cet assemblage peut aussi bien se monter sur les nouvelles attaches-moteurs que les existantes. Par ailleurs, bien que décrit appliqué à une attache-moteur avant, l'assemblage de l'invention peut être utilisé pour les autres attaches-moteurs.

Le deuxième palier lisse 78 comprend un prolongement tubulaire 82 qui présente une extrémité 82E et un diamètre extérieur identique à celui du corps tubulaire 78.1 du deuxième palier lisse 78. En fonctionnement, le prolongement tubulaire 82 est en saillie par rapport à la face extérieure 66E de la deuxième branche 66.

Selon un mode de réalisation visible sur la figure 8, le prolongement tubulaire 82 comprend une première portion intérieure 84 taraudée qui jouxte le corps tubulaire 78.1 et qui présente un diamètre intérieur D84 supérieur ou égal au diamètre intérieur D78.1 du corps tubulaire 78.1 ainsi qu'une deuxième portion intérieure 86 lisse, intercalée entre la première portion intérieure 84 et l'extrémité 82E du prolongement tubulaire 82, qui présente un diamètre intérieur D86 supérieur ou égal au diamètre intérieur D84 de la première portion intérieure 84. Les première et deuxième portions intérieures 84 et 86 sont coaxiales à un axe A82 qui correspond à l'axe du prolongement tubulaire 82.

Selon une configuration, le prolongement tubulaire 82 comporte une gorge intérieure 88 positionnée entre le corps tubulaire 78.1 et la première portion intérieure 84, la gorge intérieure 88 présentant un fond avec un diamètre supérieur au diamètre intérieur D84 de la première portion intérieure 84.

Le dispositif de blocage 80 comprend une vis de blocage 90, s'étendant entre une première face terminale 90.1 et une deuxième face terminale 90.2, présentant un premier tronçon 92 qui jouxte la première face terminale 90.1 et un deuxième tronçon 94 qui jouxte la deuxième face terminale 90.2. Les premier et deuxième tronçons 92 et 94 sont coaxiaux à un axe A90 qui correspond à l'axe de la vis de blocage 90. En fonctionnement, l'axe A90 de la vis de blocage 90 est confondu avec l'axe A82 du prolongement tubulaire 82.

Les premier et deuxième tronçons 92 et 94 sont séparés par une face d'épaulement 96 sensiblement parallèle aux première et deuxième faces terminales 90.1 et 90.2.

Le premier tronçon 92 comprend un filetage 98 configuré pour se visser sur la première portion intérieure 84 taraudée du prolongement tubulaire 82.

A titre indicatif, le premier tronçon 92 a un diamètre extérieur sensiblement égal au double de celui du deuxième tronçon 94.

Selon une configuration, la vis de blocage 90 comprend un trou traversant 100, coaxial aux premier et deuxième tronçons 92, 94, qui s'étend entre les première et deuxième faces terminales 90.1, 90.2 et des trous traversants 102 parallèles à l'axe A90 de la vis de blocage 90 qui s'étendent entre la première face terminale 90.1 et la face d'épaulement 96. Les trous traversants 102 sont configurés pour loger des ergots d'une clef afin de serrer la vis de blocage 90. Ces trous traversants 100 et 102 permettent de réduire la masse de la vis de blocage 90.

Le premier tronçon 92 comprend une collerette 104 qui présente un diamètre supérieur au diamètre extérieur du premier tronçon 92 et légèrement inférieur au diamètre intérieur D86 de la deuxième portion intérieure 86 du prolongement tubulaire 82. La collerette 104 est positionnée à une extrémité du premier tronçon 92 de sorte que la face d'épaulement 96 de la vis de blocage comprenne une des faces latérales de ladite collerette 104.

Le dispositif de blocage 80 comprend des premier et deuxième systèmes de blocage 106, 108 pour immobiliser la vis de blocage 90 par rapport au prolongement tubulaire 82.

Le premier système de blocage 106 comprend un anneau d'arrêt élastique 110 intérieur, également appelé circlip intérieur, et une gorge 112, ménagée dans le deuxième tronçon intérieur 86 du prolongement tubulaire 82, logeant partiellement en fonctionnement l'anneau d'arrêt élastique 110 intérieur. En fonctionnement, l'anneau d'arrêt élastique 110 intérieur est intercalé entre la vis de blocage 90 et le deuxième système de blocage 108, la face d'épaulement 96 prenant appui contre l'anneau d'arrêt élastique 108 intérieur. La gorge 112 est séparée de la première portion intérieure 84 d'une distance sensiblement égale, ou très légèrement supérieure, à la largeur L104 de la collerette 104. En fonctionnement, lorsque l'anneau d'arrêt élastique 110 intérieur est partiellement logé dans la gorge 112, il immobilise en translation, et donc en rotation, la vis de blocage 90. La face latérale de la collerette 104 et la face d'épaulement 96 forment un appui propre pour l'anneau d'arrêt élastique 110 afin que ce dernier ne se déchausse pas lors d'un dévissage inopportun de la vis de blocage 90.

Le deuxième système de blocage 108 comprend un fil de blocage 114, des premiers orifices 116 traversant le deuxième tronçon 94 de la vis de blocage 90 et des deuxièmes orifices 118 traversant la deuxième portion intérieure 86 du prolongement tubulaire 82, le fil de blocage 114 traversant en fonctionnement les premiers et deuxièmes orifices 116 et 118 pour assurer le blocage de la vis de blocage 90 par rapport au prolongement tubulaire 82.

Selon une configuration, le deuxième tronçon 94 de la vis de blocage 90 comprend six premiers orifices 116 répartis régulièrement sur sa périphérie. La deuxième portion intérieure 86 du prolongement tubulaire 82 comprend dix deuxièmes orifices 118 répartis régulièrement sur sa périphérie.

Selon une configuration, le fil de blocage 114 traverse un des deuxièmes orifices 118 de la deuxième portion intérieure 86 du prolongement tubulaire 82, deux premiers orifices 116, diamétralement opposés, du deuxième tronçon 94 de la vis de blocage 90, puis un deuxième orifice 118 de la deuxième portion intérieure 86 du prolongement tubulaire 82.

Pour assurer le maintien du fil de blocage dans les premiers et deuxièmes orifices 116 et 118, les deux extrémités 114.1 et 114.2 du fil de blocage 114 sont reliées entre elles. Selon une configuration, les extrémités 114.1 et 114.2 sont toronnées pour assurer leur liaison.

Selon l'invention, le dispositif de blocage 80 ne comprend que deux systèmes de blocage 106 et 108 en plus de la vis de blocage 90, ce qui permet de réduire le déport D du prolongement tubulaire 82 par rapport à la face extérieure 66E de la deuxième branche 66.Ainsi, on obtient un assemblage plus compact.

## Revendications

1. Assemblage pour une attache-moteur d'aéronef comprenant :
- un axe d'articulation (72),
- un premier palier lisse (76) supportant l'axe d'articulation (72), positionné dans une première branche (64) d'une chape (62) et comportant un épaulement intérieur (76.3) bloquant en translation l'axe d'articulation (72) selon un premier sens en fonctionnement,
- un deuxième palier lisse (78) supportant l'axe d'articulation (72), positionné dans une seconde branche (66) de la chape (62), comportant un corps tubulaire (78.2) et un prolongement tubulaire (82), ledit prolongement tubulaire (82) présentant une première portion intérieure (84) taraudée,
- un dispositif de blocage bloquant en translation l'axe d'articulation (72) selon un deuxième sens en fonctionnement qui comprend :
o une vis de blocage (90), s'étendant entre une première face terminale (90.1) contre laquelle prend appui l'axe d'articulation (72) en fonctionnement et une deuxième face terminale (90.2), présentant un premier tronçon (92) qui jouxte la première face terminale (90.1) et un deuxième tronçon (94) qui jouxte la deuxième face terminale (90.2), le premier tronçon (92) comportant un filetage (98) se vissant en fonctionnement sur la première portion intérieure (84) taraudée du prolongement tubulaire (82),
o des premier et deuxième systèmes de blocage (106, 108) pour immobiliser la vis de blocage (90) par rapport au prolongement tubulaire (82),
l'assemblage étant **caractérisé en ce que** le premier système de blocage (106) comprend un anneau d'arrêt élastique (110) intérieur et une gorge (112), ménagée dans le prolongement tubulaire (82), logeant partiellement en fonctionnement l'anneau d'arrêt élastique (110) intérieur et **en ce que** le deuxième système de blocage (108) comprend un fil de blocage (114), des premiers orifices (116) traversant le deuxième tronçon (94) de la vis de blocage (90) et des deuxièmes orifices (118) traversant le prolongement tubulaire (82), le fil de blocage (114) traversant en fonctionnement les premiers et deuxièmes orifices (116, 118) pour assurer un blocage de la vis de blocage (90) par rapport au prolongement tubulaire (82).

2. Assemblage pour une attache-moteur d'aéronef selon la revendication 1, **caractérisé en ce que** l'anneau d'arrêt élastique (110) intérieur est intercalé entre la vis de blocage (90) et le deuxième système de blocage (108).

3. Assemblage pour une attache-moteur d'aéronef selon la revendication 1 ou 2, **caractérisé en ce que** la vis de blocage (90) comprend une face d'épaulement (96), séparant les premier et deuxième tronçons (92, 94), sensiblement parallèle aux première et deuxième faces terminales (90.1, 90.2), prenant appui en fonctionnement contre l'anneau d'arrêt élastique (108) intérieur.

4. Assemblage pour une attache-moteur d'aéronef selon la revendication précédente, **caractérisé en ce que** le prolongement tubulaire (82) comprend une deuxième portion intérieure (86) lisse, intercalée entre la première portion intérieure (84) et une extrémité (82E) du prolongement tubulaire (82), qui présente un diamètre intérieur (D86) supérieur ou égal au diamètre intérieur (D84) de la première portion intérieure (84).

5. Assemblage pour une attache-moteur d'aéronef selon la revendication précédente, **caractérisé en ce que** le premier tronçon (92) de la vis de blocage (90) comprend une collerette (104) présentant un diamètre supérieur au diamètre extérieur du premier tronçon (92) et légèrement inférieur au diamètre intérieur (D86) de la deuxième portion intérieure (86) du prolongement tubulaire (82), la collerette (104) étant positionnée à une extrémité du premier tronçon (92) de sorte qu'une de ses faces latérales soit disposée dans le prolongement de la face d'épaulement (96).

6. Assemblage pour une attache-moteur d'aéronef selon l'une des revendications précédentes, **caractérisé en ce que** le fil de blocage (114) comprend deux extrémités (114.1, 114.2) reliées entre elles pour assurer son maintien dans les premiers et deuxièmes orifices (116, 118).

7. Assemblage pour une attache-moteur d'aéronef selon la revendication précédente, **caractérisé en ce que** les deux extrémités (114.1, 114.2) du fil de blocage (114) sont toronnées.

8. Assemblage pour une attache-moteur d'aéronef selon l'une des revendications précédentes, **caractérisé en ce que** la vis de blocage (90) comprend un trou traversant (100), coaxial aux premier et deuxième tronçons (92, 94), ledit trou traversant (100) s'étendant entre les première et deuxième faces terminales (90.1, 90.2).

9. Assemblage pour une attache-moteur d'aéronef selon l'une des revendications précédentes, **caractérisé en ce que** le prolongement tubulaire (82) comporte une gorge intérieure (88) positionnée entre le corps tubulaire (78.1) et la première portion intérieure (84), la gorge intérieure (88) présentant un fond avec un diamètre supérieur au diamètre intérieur (D84) de la première portion intérieure (84).

10. Aéronef comprenant un assemblage pour une attache-moteur selon l'une des revendications précédentes.

## Patentansprüche

1. Anordnung für eine Flugzeugtriebwerksaufhängung, umfassend:
- eine Gelenkachse (72),
- ein erstes Gleitlager (76), das die Gelenkachse (72) stützt, in einem ersten Schenkel (64) einer Gabel (62) positioniert ist und eine innere Schulter (76.3) aufweist, die im Betrieb eine Verschiebung der Gelenkachse (72) entlang einer ersten Richtung blockiert,
- ein zweites Gleitlager (78), das die Gelenkachse (72) stützt, in einem zweiten Schenkel (66) der Gabel (62) positioniert ist und einen rohrförmigen Körper (78.2) und eine rohrförmige Verlängerung (82) aufweist, wobei die rohrförmige Verlängerung (82) einen ersten inneren Abschnitt (84) mit Innengewinde aufweist,
- eine Verriegelungsvorrichtung, die im Betrieb eine Verschiebung der Gelenkachse (72) entlang einer zweiten Richtung blockiert und umfasst:
∘ eine Feststellschraube (90), die sich zwischen einer ersten Endfläche (90.1), an der die Gelenkachse (72) im Betrieb abgestützt ist, und einer zweiten Endfläche (90.2) erstreckt, wobei sie ein erstes Teilstück (92), das an die erste Endfläche (90.1) angrenzt, und ein zweites Teilstück (94), das an die zweite Endfläche (90.2) angrenzt, aufweist, wobei das erste Teilstück (92) ein Gewinde (98) aufweist, das im Betrieb in den ersten inneren Abschnitt (84) mit Innengewinde der rohrförmigen Verlängerung (82) eingeschraubt wird,
∘ ein erstes und ein zweites Verriegelungssystem (106, 108) zum Arretieren der Feststellschraube (90) in Bezug auf die rohrförmige Verlängerung (82),
wobei die Anordnung **dadurch gekennzeichnet ist, dass** das erste Verriegelungssystem (106) einen inneren elastischen Sicherungsring (110) und eine in der rohrförmigen Verlängerung (82) ausgebildete Rille (112), die im Betrieb den inneren elastischen Sicherungsring (110) teilweise aufnimmt, umfasst, und dadurch, dass das zweite Verriegelungssystem (108) einen Verriegelungsdraht (114), erste Öffnungen (116), die das zweite Teilstück (94) der Feststellschraube (90) durchqueren, und zweite Öffnungen (118), welche die rohrförmigen Verlängerung (82) durchqueren, umfasst, wobei der Verriegelungsdraht (114) im Betrieb die ersten und zweiten Öffnungen (116, 118) durchquert, um eine Verriegelung der Feststellschraube (90) in Bezug auf die rohrförmige Verlängerung (82) sicherzustellen.

2. Anordnung für eine Flugzeugtriebwerksaufhängung nach Anspruch 1, **dadurch gekennzeichnet, dass** der innere elastische Sicherungsring (110) zwischen der Feststellschraube (90) und dem zweiten Verriegelungssystem (108) eingefügt ist.

3. Anordnung für eine Flugzeugtriebwerksaufhängung nach Anspruch 1 oder 2, **dadurch gekennzeichnet, dass** die Feststellschraube (90) eine Schulterfläche (96) umfasst, die das erste und das zweite Teilstück (92, 94) trennt, im Wesentlichen parallel zur ersten und zweiten Endfläche (90.1, 90.2) ist und im Betrieb an dem inneren elastischen Sicherungsring (108) anliegt.

4. Anordnung für eine Flugzeugtriebwerksaufhängung nach dem vorhergehenden Anspruch, **dadurch gekennzeichnet, dass** die rohrförmige Verlängerung (82) einen glatten zweiten inneren Abschnitt (86) umfasst, der zwischen dem ersten inneren Abschnitt (84) und einem Ende (82E) der rohrförmigen Verlängerung (82) angeordnet ist und einen Innendurchmesser (D86) aufweist, der größer oder gleich dem Innendurchmesser (D84) des ersten inneren Abschnitts (84) ist.

5. Anordnung für eine Flugzeugtriebwerksaufhängung nach dem vorhergehenden Anspruch, **dadurch gekennzeichnet, dass** das erste Teilstück (92) der Feststellschraube (90) einen Flansch (104) umfasst, der einen Durchmesser aufweist, der größer als der Außendurchmesser des ersten Teilstücks (92) und etwas kleiner als der Innendurchmesser (D86) des zweiten inneren Abschnitts (86) der rohrförmigen Verlängerung (82) ist, wobei der Flansch (104) an einem Ende des ersten Teilstücks (92) positioniert ist, und zwar derart, dass eine seiner seitlichen Flächen in der Verlängerung der Schulterfläche (96) angeordnet ist.

6. Anordnung für eine Flugzeugtriebwerksaufhängung nach einem der vorhergehenden Ansprüche, **dadurch gekennzeichnet, dass** der Verriegelungsdraht (114) zwei Enden (114.1, 114.2) umfasst, die miteinander verbunden sind, um seinen Halt in den ersten und zweiten Öffnungen (116, 118) sicherzustellen.

7. Anordnung für eine Flugzeugtriebwerksaufhängung nach dem vorhergehenden Anspruch, **dadurch gekennzeichnet, dass** die zwei Enden (114.1, 114.2) des Verriegelungsdrahtes (114) verdrillt sind.

8. Anordnung für eine Flugzeugtriebwerksaufhängung nach einem der vorhergehenden Ansprüche, **dadurch gekennzeichnet, dass** die Feststellschraube (90) ein Durchgangsloch (100) umfasst, das mit dem ersten und dem zweiten Teilstück (92, 94) koaxial ist, wobei sich das Durchgangsloch (100) zwischen der ersten und der zweiten Endfläche (90.1, 90.2) erstreckt.

9. Anordnung für eine Flugzeugtriebwerksaufhängung nach einem der vorhergehenden Ansprüche, **dadurch gekennzeichnet, dass** die rohrförmige Verlängerung (82) eine innere Rille (88) aufweist, die zwischen dem rohrförmigen Körper (78.1) und dem ersten inneren Abschnitt (84) angeordnet ist, wobei die innere Rille (88) einen Boden mit einem Durchmesser aufweist, der größer als der Innendurchmesser (D84) des ersten inneren Abschnitts (84) ist.

10. Luftfahrzeug, welches eine Anordnung für eine Triebwerksaufhängung nach einem der vorhergehenden Ansprüche umfasst.

## Claims

1. Assembly for an aircraft engine mounting comprising:
- an articulation axis (72),
- a first plain bearing (76) supporting the articulation axis (72), positioned in a first branch (64) of a yoke joint (62) and comprising an internal shoulder (76.3) blocking the translation of the articulation axis (72) in a first direction in operation,
- a second plain bearing (78) supporting the articulation axis (72), positioned in a second branch (66) of the yoke joint (62), comprising a tubular body (78.2) and a tubular extension (82), said tubular extension (82) having a first, tapped internal portion (84),
- a blocking device blocking the translation of the articulation axis (72) in a second direction in operation which comprises:
∘ a blocking screw (90), extending between a first end face (90.1) against which the articulation axis (72) bears in operation and a second end face (90.2), having a first section (92) which adjoins the first end face (90.1) and a second section (94) which adjoins the second end face (90.2), the first section (92) comprising a threading (98) that is screwed in operation onto the first, tapped internal portion (84) of the tubular extension (82),
∘ first and second blocking systems (106, 108) for immobilizing the blocking screw (90) relative to the tubular extension (82),
the assembly being **characterized in that** the first blocking system (106) comprises an internal elastic stop ring (110) and a groove (112), formed in the tubular extension (82), in operation partially housing the internal elastic stop ring (110) and **in that** the second blocking system (108) comprises a blocking wire (114), first orifices (116) passing through the second section (94) of the blocking screw (90) and second orifices (118) passing through the tubular extension (82), the blocking wire (114) in operation passing through the first and second orifices (116, 118) to ensure a blocking of the blocking screw (90) relative to the tubular extension (82) .

2. Assembly for an aircraft engine mounting according to Claim 1, **characterized in that** the internal elastic stop ring (110) is inserted between the blocking screw (90) and the second blocking system (108).

3. Assembly for an aircraft engine mounting according to Claim 1 or 2, **characterized in that** the blocking screw (90) comprises a shoulder face (96), separating the first and second sections (92, 94), substantially parallel to the first and second end faces (90.1, 90.2), bearing in operation against the internal elastic stop ring (108).

4. Assembly for an aircraft engine mounting according to the preceding claim, **characterized in that** the tubular extension (82) comprises a smooth internal second portion (86), inserted between the first internal portion (84) and an end (82E) of the tubular extension (82), which has an internal diameter (D86) greater than or equal to the internal diameter (D84) of the first internal portion (84) .

5. Assembly for an aircraft engine mounting according to the preceding claim, **characterized in that** the first section (92) of the blocking screw (90) comprises a flange (104) having a diameter greater than the outer diameter of the first section (92) and slightly less than the internal diameter (D86) of the second internal portion (86) of the tubular extension (82), the flange (104) being positioned at one end of the first section (92) such that one of its lateral faces is arranged in the extension of the shoulder face (96).

6. Assembly for an aircraft engine mounting according to one of the preceding claims, **characterized in that** the blocking wire (114) comprises two ends (114.1, 114.2) linked to one another to ensure that it is held in the first and second orifices (116, 118).

7. Assembly for an aircraft engine mounting according to the preceding claim, **characterized in that** the two ends (114.1, 114.2) of the blocking wire (114) are stranded.

8. Assembly for an aircraft engine mounting according to one of the preceding claims, **characterized in that** the blocking screw (90) comprises a through-hole (100), coaxial to the first and second sections (92, 94), said through-hole (100) extending between the first and second end faces (90.1, 90.2).

9. Assembly for an aircraft engine mounting according to one of the preceding claims, **characterized in that** the tubular extension (82) comprises an internal groove (88) positioned between the tubular body (78.1) and the first internal portion (84), the internal groove (88) having a bottom with a diameter greater than the internal diameter (D84) of the first internal portion (84).

10. Aircraft comprising an assembly for an engine mounting according to one of the preceding claims.
